# EUROPÄISCHE PATENTSCHRIFT

(11) **EP 2 102 484 B1**
(45) Veröffentlichungstag und Bekanntmachung des Hinweises auf die Patenterteilung: **16.02.2011**
(21) Anmeldenummer: 07857787.1
(22) Anmeldetag: 19.12.2007
(51) Int. Cl.: F02M 37/22

(54) **KRAFTSTOFFFILTER EINES FAHRZEUG-VERBRENNUNGSMOTORS**
FUEL FILTER OF A VEHICLE INTERNAL COMBUSTION ENGINE
FILTRE À CARBURANT D'UN MOTEUR À COMBUSTION DE VÉHICULE

(30) Priorität: 20.12.2006 DE 102006060128
(43) Veröffentlichungstag der Anmeldung: 23.09.2009
(73) Patentinhaber: MAHLE International GmbH, 70376 Stuttgart (DE)
(72) Erfinder: KOBALL, Michael, 70565 Stuttgart (DE); LIKA, Torsten, 70197 Stuttgart (DE); PFEFFER, Andreas, 70176 Stuttgart (DE)
(74) Vertreter: BRP Renaud & Partner
(86) Internationale Anmeldenummer: PCT/EP2007/064164
(87) Internationale Veröffentlichungsnummer: WO 2008/074812

(56) Entgegenhaltungen:
- WO-A-02/095211
- WO-A-2005/031148
- FR-A- 2 829 703

## Beschreibung

Die Erfindung betrifft ein Kraftstofffilter eines Fahrzeug-Verbrennungsmotors nach dem Oberbegriff des Patentanspruchs 1.

Ein solches Filter ist aus EP 1 389 273 B1 bekannt.

Die Erfindung beschäftigt sich mit dem Problem, ein gattungsgemäßes Filter für eine filterreinseitige Abtrennung bereitzustellen, bei dem zumindest der Ringfiltereinsatz nach einer betriebsbedingten Erschöpfung ausgetauscht werden kann. Insbesondere soll eine Filtereinrichtung geschaffen werden, bei der bei einem Filterwechsel zumindest die Stabeinrichtung wiederverwendbar ist, das heißt bei der bei einem Filterwechsel die Stabeinrichtung von den übrigen Filtergehäuseteilen reversibel gelöst werden kann.

Gelöst wird diese Aufgabe in erster Linie durch eine Ausführung eines gattungsgemäßen Kraftstofffilters nach den kennzeichnenden Merkmalen des Patentanspruchs 1.

Vorteilhafte und zweckmäßige Ausgestaltungen sind Gegenstand der Unteransprüche.

Eine besonders vorteilhafte Ausführungsform umfasst eine Einrichtung, mit der bei einem Filterwechsel die Stabeinrichtung einfach und wirksam von denjenigen Filterbereichen getrennt werden kann, gegenüber denen sie durch Ringdichtungen, die in erster Linie als radiale Dichtringe ausgelegt sind, bei betriebsbereit montiertem Filter gedichtet ist. Wichtig ist eine solche Einrichtung, da insbesondere bei einer Mehrzahl an Dichtungen zwischen der Stabeinrichtung und Teilen des Filters eine relativ hohe Lösekraft benötigt wird, die häufig nur schwer oder gar nicht von Hand ohne zusätzliche Hilfsmittel aufgebracht werden kann.

Das erfindungsgemäß vorgesehene Hilfsmittel besteht in einer Aushebe-Gewindeeinrichtung. Eine solche Aushebe-Gewindeerinchtung besteht bei zwei gegeneinander zu lösenden Bauteilen darin, dass in einem dieser beiden Bauteile eine Schraube drehbar gelagert ist und in dem anderen Bauteil ein Widerlager vorgesehen ist, an dem sich die Schraube abstützen kann. Ist eine solche Schraube in einem der beiden Bauteile in einem Gewinde gelagert, so resultiert aus einem Drehen der Schraube eine zwangsläufige Relativbewegung der betreffenden beiden Bauteile. Eine solche Relativbewegung bedeutet wiederum, dass die beiden Bauteile voneinander getrennt werden beziehungsweise dass das eine von dem anderen Bauteil gelöst wird.

Konkret werden erfindungsgemäß zwei Lösungen vorgeschlagen.

Die eine Lösung betrifft das Vorsehen einer Aushebe-Gewindeeinrichtung zwischen dem Deckel des Filters und einem dort lagernden Kopf der Stabeinrichtung. Hier besitzt die Stabeinrichtung im Bereich ihres Kopfes radial abstehende Lagerhauben. Diese sind mit einem Innengewinde zum Einschrauben von jeweils einer die Gewinde durchgreifenden Schraube versehn. In montiertem Zustand des Filters liegt die Stabeinrichtung mit ihrem Kopf und dessen Lagerhauben von außen an dem Deckel des Filters an. Zum Lösen der Stabeinrichtung aus dem Filter wird diese Aushebe-Gewindeeinrichtung dadurch betätigt, dass die Schrauben in das Innengewinde der Lageraugen eingedreht werden. Da diese Schrauben sich an dem Gewindedeckel abstützen, erfolgt durch ein solches Eindrehen der Schrauben ein Abheben, das heißt Lösen der Stabeinrichtung aus deren Dichtsitzen innerhalb des Filters. Ein Lösen aus dem Dichtsitzen der Stabeinrichtung reicht aus, um danach die Stabeinrichtung mit ausschließlich einfacher Handkraft aus dem Filtergehäuse herausziehen zu können.

Eine besonders vorteilhafte Ausgestaltung dieser Aushebe-Gewindeeinrichtung im Kopfbereich der Stabeinrichtung besteht darin, diese Einrichtung in die Befestigungsmitte der Stabeinrichtung zu integrieren, mit denen die Stabeinrichtung an dem Filtergehäuse, insbesondere an dem Decke des Filters befestigt wird. Diese Befestigungsmittel umfassen bei dieser vorteilhaften Ausführung in den Lageraugen der Befestigungseinrichtung Durchgangsbohrungen zur Aufnahme einer Kopfschraube, die in ein Sacklochgewinde des Deckel einschraubbar sind. Das Sacklochgewinde muss innerhalb des Deckels dicht angebracht sein, damit auch bei einer fehlenden Schraub in dem Sacklochgewinde das Filterinnere gegenüber außen gedichtet ist. Diese erfindungsgemäß vorgesehene Kombination der Befestigungsmittel einerseits und der Aushebe-Gewindeeinrichtung besteht darin, dass das AushebeGewinde innerhalb der jeweiligen Bohrung eines Lagerauges der Stabeinrichtung vorgesehen ist. Dabei ist diese AushebeGewinde auf einem Innenumfang der jeweiligen Druchgangsbohrung eines Lagerauges vorgesehen, der so groß ist, dass die jeweilige Befestigungsschraube durch das Aushebegewinde ungestört die Durchgangsbohrung durchgreifen kann. Bei einer derartigen Kombination der Befestigungsmittel und der Aushebe-Gewindeeinrichtung ist vor einer Betätigung der Aushebe-Gewindeeinrichtung die jeweilige Befestigungsschraube zu entfernen.

Die zweite hier konkret herausgestellte, erfindungsgemäße Aushebe-Gewindeeinrichtung ist im Bodenbereich des Filtergehäuses vorgesehen. Sie umfasst eine Gewindeverbindung zwischen einem in dem Gehäuseboden drehbar gelagerten, von außen betätigbaren ersten Gewindebauteil und ein von dem innerhalb des Filter liegenden freien Ende des Stabes der Stabeinrichtung gebildeten zweiten Gewindebauteil. Das erste Gewindebauteil ist zweckmäßigerweise eine in dem Boden drehbar gelagerte Kappe mit einem innerhalb des Filtergehäuses liegenden Ringbundes mit einem Innengewinde. Das zweite Gewindebauteil ist in diesem Fall ein komplementär an dem freien Ende des Stabes vorgesehenes Außengewinde. Diese Einrichtung stellt automatisch eine Kombination der Befestigungsmittel der Stabeinrichtung an dem Filtergehäuse und der Aushebe-Gewindeeinrichtung für eine Lösen der Stabeinrichtung von dem Gehäuse dar. Diese ergibt sich daraus, dass bei einem Schließen des Gewindes wegen des axial fixierten, in dem Gehäuseboden drehbar gelagerten ersten Gewindebauteiles eine axiale Fixierung der Stabeinrichtung innerhalb des Gehäuses erfolgt, während bei einem Lösen des Gewindes die Stabeinrichtung aus dem Filtergehäuse axial herausgedrückt wird.

Das erste Gewindebauteil im Bodenbereich des Filtergehäuses kann eine Einrichtung zum Ablassen von in dem Wasser-Sammelraum des Filters gesammeltem Wasser umfassen. Dabei kann diese Wasserablasseinrichtung eine in das erste Gewindebauteil integrierte, in ihrer Ausführung an sich bekannte Wasserablassschraube ausgebildet sein.

Ein vorteilhaftes, nachfolgend näher beschriebenes Ausführungsbeispiel ist in der Zeichnung dargestellt.

In dieser zeigen
- Fig. 1: einen Längsschnitt durch ein erfindungsgemäßes Kraftstofffilter in schematischer Darstellung,
- Fig. 2: eine perspektivische Ansicht der Stabeinrichtung des Filters nach Fig. 1 in nicht in das Filter eingesetztem Zustand,
- Fig. 3: eine Ansicht des Filters von vorne,
- Fig. 4: eine Ansicht des Filters von oben auf dessen De- ckel mit eingesetzter Stabeinrichtung,
- Fig. 5: eine Ansicht auf den Filterdeckel von oben ohne eingesetzte Stabeinrichtung,
- Fig. 6: eine Ansicht des Filterdeckels von dessen dem Fil- terinneren zugewandten Seite aus, ohne eingesetzte Stabeinrichtung,
- Fig. 7: einen Teilschnitt durch den Filterdeckel nach Li- nie VII-VII in Fig. 5,
- Fig. 8: einen Ausschnitt aus einem unteren Bodenbereich des Filtergehäuses mit einer Aushebe-Gewinde- einrichtung im Schnitt.

Ein Kraftstofffilter für einen Fahrzeugverbrennungsmotor umfasst ein mit einer Stabeinrichtung 1 lösbar verbindbares Filtergehäuse 2 mit einem, in dem Filtergehäuse 2 gelagerten, radial von außen nach innen durchströmbaren Ringfiltereinsatz 3.

Der Ringfiltereinsatz 3 ist stirnseitig gedichtet durch eine erste Endscheibe 4 und eine zweite Endscheibe 5. Beide Endscheiben 4, 5 sind radial außen jeweils mit einem ersten Dichtring 6 versehen, über die die beiden Endscheiben 4, 5 radial gegenüber dem Filtergehäuse 1 gedichtet sind. Der zwischen den beiden ersten Dichtringen 6 der beiden Endscheiben 4 und 5 liegende Raum zwischen einem Filtermedium 7 des Ringfiltereinsatzes 3 und dem Gehäuse 2 ist Teil des Filterrohraumes 8.

Ein Stab 9 als Bestandteil der Stabeinrichtung 1 durchdringt von einer ersten Stirnseite 10 des Filtergehäuses 2 aus den Ringfiltereinsatz 3 bis in den Bereich der ersten Endscheibe 4. Zwischen der ersten Endscheibe 4 des Ringfiltereinsatzes 3 und einem Boden des Filtergehäuses 2 befindet sich ein Aufnahmeraum 11, auf dessen Funktion nachstehend noch näher eingegangen wird. Dieser Aufnahmeraum 11 ist begrenzt durch einerseits einen Bereich des Filtergehäuses 2 sowie die erste Endscheibe 4, wobei diese erste Endscheibe 4 radial außen durch einen der ersten Dichtringe 6 gegenüber dem Filtergehäuse und radial innen durch einen zweiten Dichtring 12 gegenüber dem Stab 9 an dessen geschlossenem Ende gedichtet ist. Der Stab 9 weist einen Kraftstoffzuführkanal 13 auf, der über einen Raum 15 innerhalb des Filtergehäuses mit einem Zuführstutzen 14 kommuniziert, der die erste Stirnseite 10 des Filtergehäuses 2 durchdringt. Der Raum 15 liegt innerhalb eines fest und dicht mit der Innenseite der ersten Stirnseite 10 des Filtergehäuses 2 verbundenen Stutzens 16, der durch die zweite Endscheibe 5 hindurch geringfügig in den zentralen inneren Freiraum des Ringfiltereinsatzes 3 eintaucht, und wird innerhalb der ersten Filter-Stirnseite 10 von einem dort lagernden Kopfbereich 17 der Stabeinrichtung 1 begrenzt. Der Kopfbereich 17 ist dabei gegenüber der ersten Stirnseite des Filtergehäuses 2 über einen dritten Dichtring 18 gedichtet. Der Stutzen 16 durchdringt im Inneren des Filtergehäuses 2 einen zwischen der zweiten Endscheibe 5 und der ersten Stirnseite 10 des Filtergehäuses 2 liegenden Raum 19. In diesem Raum 19 weist der Stutzen 16 im Bereich des Zuführstutzens 14 eine radial Ausbuchtung auf, um die erforderliche Verbindung gegenüber dem Flüssigkeitszuführkanal 13 innerhalb des Stabes 9 zu ermöglichen.

Die erste Stirnseite 10 des Filters ist als eine teilweise doppelwandige Endscheibe 20 aus Blech hergestellt. Der doppelwandige Bereich wird durch den Stutzen 16 erzeugt, der ebenfalls aus Blech geformt und mit dem übrigen Material der Endscheibe 20 dicht verlötet oder verschweißt ist.

Abströmseitig, das heißt reinseitig des Filtermediums 7 des Ringfiltereinsatzes 3 ist ein ringförmiges Abscheideelement 21 vorgesehen. Dieses Abscheideelement 21 ist fest und dicht mit der zweiten Endscheibe 5 verbunden. Gegenüber der ersten Endscheibe 4 liegt eine lösbare, dichte Verbindung vor. Diese Dichtung erfolgt über einen vierten Dichtring 22 zwischen radial außen einem axialen Endbereich des Abscheideelementes 21 und einem radialen Innenbereich eines Kragens 23 der ersten Endscheibe 20. Der Raum 19 ist Bestandteil des Filter-Reinraumes 24 und kommuniziert nach außerhalb des Filtergehäuses 2 über einen, in der ersten Stirnseite 10 des Filtergehäuses 2 vorgesehenen Abflussstutzen 25. Eine Trennung zwischen dem Rohraum 15 und dem Reinraum 24 des Filters erfolgt im Bereich der zweiten Endscheibe 5 zwischen dem Stab 9 und dem Stutzen 16 über einen fünften Dichtring 26. Für eine leitende Verbindung zwischen dem rohseitig liegenden Raum 15 und dem Flüssigkeitszuführkanal 13 innerhalb des Stabes 9 dienen in der Stabeinrichtung zwischen dessen Kopfbereich 17 und dem Stab 9 vorgesehene Öffnungen 27. Diese Öffnungen 27 ergeben sich praktisch daraus, dass der Kopfbereich 17 der Stabeinrichtung 1 mit dem Stab 9 lediglich über umfangsmäßig gegeneinander beabstandete Rippen 27' verbunden ist.

Die Durchströmung des Filters ist durch Strömungspfeile angedeutet.

Dem Verlauf der Strömungspfeile ist zu entnehmen, dass durch den Flüssigkeitszuführkanal 13 rohseitig einströmender Kraftstoff im Bereich der ersten Endscheibe 4 von radial innen nach radial außen in den stromauf des Filtermediums 7 liegenden Bereich des Filterrohraumes 8 eintritt.

Die Führung des Kraftstoffes als Flüssigkeit von radial innen nach radial außen in den vorgenannten Bereich stellt sich wie folgt dar.

In der ersten Endscheibe 4 sind zwei diametral entegegengerichtete, radiale Verbindungskanäle 28 vorgesehen. Bei einer aus Kunststoff bestehenden, ersten Endscheibe 4 kann eine solche Endscheibe als Gussteil mit, die Kanäle 28 ausformenden, entfernbaren Gießkernen erzeugt werden. Auf diese Weise lässt sich eine solche Endscheibe 4 rationell einstückig herstellen.

In dem Stab 9 der Stabeinrichtung 1 sind elektrische Heizelemente 29 vorgesehen, um den durch den Kraftstoffzuführkanal 13 fließenden Kraftstoff erwärmen zu können. Die elektrische Heizenergie wird über elektrische Leitungen zugeführt, die durch den Kopfbereich 17 der Stabeinrichtung 1 nach außerhalb des Filtergehäuses 2 geführt werden und zeichnerisch nicht dargestellt sind.

Die Stabeinrichtung 1 ist über Schraubverbindungen 30 lösbar mit der ersten Stirnseite 10 des Filtergehäuses verbunden.

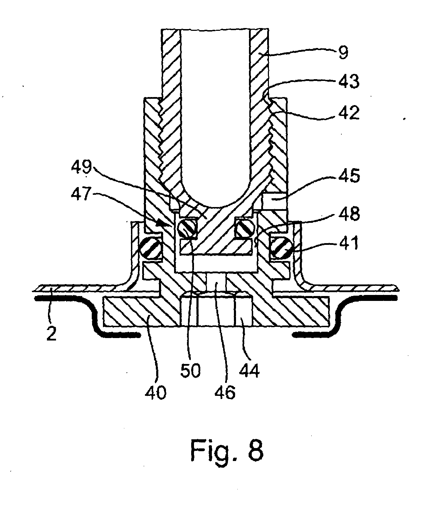

Das ringförmige Abscheideelement 21 reinseitig des Filtermediums 7 des Ringfiltereinsatzes 3 ist ein sogenannter Coalescer, mit dem Wasseranteile aus dem Kraftstoff abgeschieden werden können. Dieses reinseitig durch beziehungsweise an dem als Coalescer ausgebildeten Abscheideelement 21 abgeschiedene Wasser kann durch, in der ersten Endscheibe 4 vorgesehene Öffnungen 31 in den Aufnahmeraum 11, der als Wassersammelraum dient, abfließen. Das in dem Aufnahmeraum 11 gesammelte, abgeschiedene Wasser kann durch eine im Boden des Filtergehäuses 2 vorgesehen, in Fig. 8 angedeutete - nachfolgend noch näher beschriebene - Wasserablassschraube oder durch einen nicht gezeichneten, innerhalb der Stabeinrichtung 1 vorgesehenen Wasserabführkanal nach außerhalb des Filters entfernt werden.

Der Aufbau des Filters gestattet ein Abtrennen des Filtergehäuses 2 von der Stabeinrichtung 1. Dies bedeutet, dass unter Beibehaltung der Stabeinrichtung 1 das Filtergehäuse 2 einschließlich des Ringfiltereinsatzes 3 bei einem betriebsbedingt erschöpften Ringfiltereinsatz 3 gewechselt werden kann.

Ein Kraftstofffilter der beschriebenen und gezeichneten Art wird beispielsweise über ein metallisches Spannband an einem Motor befestigt, wobei dieses nicht gezeichnete Spannband in dem, an die erste Stirnseite 10 des Filtergehäuses 2 angrenzenden Gehäusebereich angesetzt werden kann.

Bei einem erforderlichen Filterwechsel wird das Spannband gelöst, so dass das Filtergehäuse 2 dann lediglich noch an beispielsweise flexiblen, mit den Stutzen 14 und 25 verbundenen Leitungen zur Zu- und Abfuhr des Kraftstoffes hängt. In diesem Zustand kann das Filtergehäuse 2 durch Auftrennung der Schraubverbindungen 30 von der wiederverwendbaren Stabeinrichtung 1 getrennt und als Ganzes durch ein neues ersetzt werden. Soweit an der Stabeinrichtung 1 Dichtungen vorgesehen sind, mit denen gegenüber Bereichen des auszutauschenden Filtergehäuses 2, beziehungsweise den darin gelagerten Teilen gedichtet wird, können diese Dichtungen bei einem Filterwechsel erneuert werden.

Das Filtergehäuse 2 kann zwischen der Endscheibe 20 und dem Unterteil des Filtergehäuses 2 auch reversibel trennbar sein, um bei einem notwendigen Filterwechsel lediglich den Ringfiltereinsatz 3 austauschen zu müssen.

Das Filter muss in dem Fahrzeug in montiertem Zustand eine Betriebslage haben, bei der der Aufnahmeraum 11 für ein schwerkraftbedingtes Absetzen abgeschiedenen Wassers unten liegt.

Für ein Abtrennen der Stabeinrichtung 1 von dem Filtergehäuse 2 beziehungsweise zumindest der Endscheibe 20 kann eine Löseeinrichtung vorgesehen sein.

Eine solche Löseeinrichtung kann zumindest hilfreich, wenn nicht sogar erforderlich sein, um die Stabeinrichtung von dem Filtergehäuse 2 trennen zu können. Ein einfaches Lösen, das heißt ein Lösen mit relativ geringer, von Hand aufzubringender Kraft ist problematisch, wenn die Stabeinrichtung 1· innerhalb des Filtergehäuses 2 über mehrere Radialdichtungen gedichtet ist. Diese Dichtungen setzen sich während längerer Betriebszeiten des Filters relativ fest und benötigen daher eine erhebliche Lösekraft, die als Gegenkraft zu der Summe der Festsitzkräfte der mehreren Dichtringe aufgebracht werden muss.

Zwei konkrete Ausführungsbeispiele für eine Löseeinrichtung mittels einer Aushebegewinde-Einrichtung sind als Ausführungsbeispiele gezeichnet und werden nachfolgend im einzelnen beschrieben.

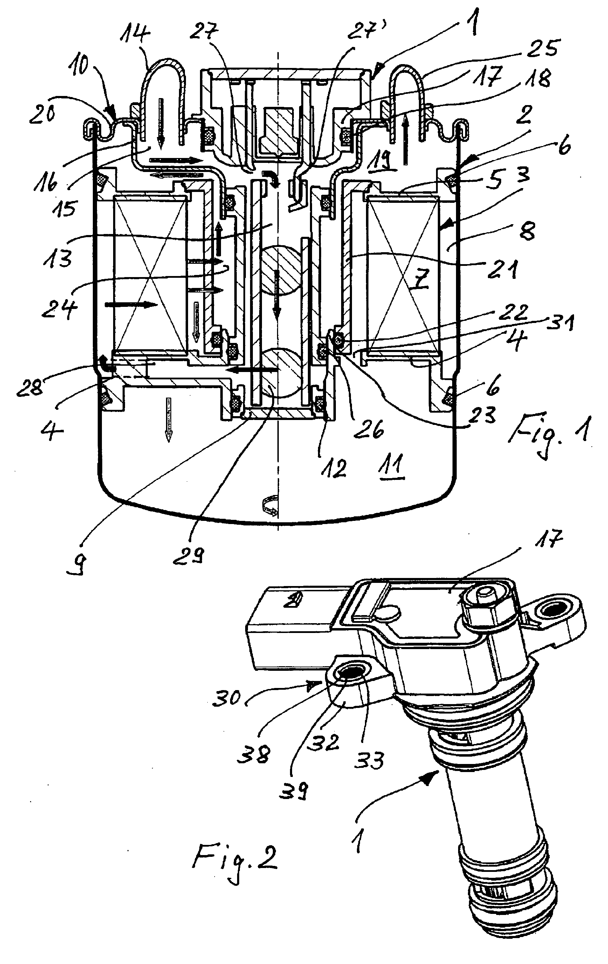

Eine erste dieser beiden Lösungen zeigen insbesondere die Fig. 1-7 auf.

Die Stabeinrichtung 1 ist in ihrem Kopfbereich 17 mit zwei etwa diagonal gegenüberliegenden Lageraugen 32 versehen. Durchgangsbohrungen 33 in diesen Lageraugen 32 dienen dazu, Befestigungsschrauben 34 aufzunehmen, mit denen die Stabeinrichtung 1 mit dem Deckel 20 verschraubt werden kann. Die Befestigungsschrauben 34 sind Kopfschrauben, die sich mit ihrem Kopf an den Lageraugen 32 als Widerlager abstützen und in jeweils ein, in dem Deckel vorgesehenes Sacklochgewinde 35 eingreifen. Die Sacklochgewinde 35 liegen jeweils in einem, mit dem Deckel verbundenen Bauteil 36. Die Bauteile 36 können einstückig ausgebildet und durch Schweißen oder Löten fest mit, von dem Deckel 20 umfassten Blechteilen verbunden sein. Die Verbindung liegt dabei insbesondere in einem Bereich, in dem der Stutzen 16 des Deckels mit einem die Außenseite des Deckels 20 bildenden Blechteil 37 verbunden ist. Das Bauteil 36 kann auch als eine Gewindehülse ausgebildet sein, die innerhalb eines Napfes angeordnet über diesen Napf fest und dicht mit den Materialien des angrenzenden Deckelbereiches verbunden ist. In dem Deckel 20 vorgesehene Sacklochgewinde 35 für eine Befestigung der Stabeinrichtung 1 besitzen den Vorteil, dass bei gelösten Befestigungsschrauben 34 die Stabeinrichtung 1 beim Lösen von dem Filtergehäuse 2 beziehungsweise dem Deckel 20 gegenüber dem Deckel 20 verdreht werden kann. Ein solches Verdrehen ist für ein Lösen der Dichtsitze der Ringdichtungen der Stabeinrichtung 1 hilfreich.

Die in dem Kopfbereich 17 der Stabeinrichtung 1 vorgesehene Löseeinrichtung für die Stabeinrichtung 1 umfasst jeweils innerhalb einer Durchgangsbohrung 33 ein dort vorgesehenes Innengewinde 38. Diese Innengewinde 38 sind durchmessermäßig derart ausgelegt, dass sie die Aufnahme der Befestigungsschrauben 34 nicht behindern. Diese Innengewinde 38 stellen mit Bezug auf eine Löseeinrichtung jeweils ein Aushebegewinde dar. Zum Lösen der Stabeinrichtung 1 von dem Gehäuse 2 beziehungsweise dem Deckel 20 muss bei gelösten Befestigungsschrauben 34 lediglich in zumindest eines der als Innengewinde 38 ausgebildeten Aushebegewinde eine in der Zeichnung nicht dargestellte Aushebeschraube eingeschraubt werden. Indem sich diese mindestens eine Aushebeschraube an dem Deckel 20 als Widerlager abstützt, wird die Stabeinrichtung 1 zwangsläufig mit zunehmender Einschraubtiefe der mindestens einen Aushebeschraube aus dem Filtergehäuse 2 beziehungsweise dem Deckel 20 herausgezogen. Sobald auf diese Weise durch die Aushebegewindeeinrichtung die Dichtsitze der Ringdichtungen der Stabeinrichtung 1 gelöst sind, lässt sich diese relativ leicht von Hand vollständig aus dem Filtergehäuse 2 beziehungsweise dem Deckel 20 herausziehen.

Besteht der Kopfbereich 17 der Stabeinrichtung 1 aus Kunststoff, so sollten in den Lageraugen 32 der jeweiligen Höhe der Lageraugen 32 entsprechende Metallhülsen 39 in die Durchgangsbohrungen 33 eingesetzt werden beziehungsweise diese bilden. Selbstverständlich sind diese Metallhülsen 39 innerhalb des Kunststoffmaterials der Lageraugen 32 axial und verdrehsicher zu fixieren. Zu diesem Zweck können die Metallhülsen 39 auf ihrem Außenumfang beispielsweise in Längsrichtung ballig und in Umfangsrichtung oval ausgebildet sein.

Die zweite, alternative Ausführung einer Löseeinrichtung für die Stabeinrichtung besteht mit Bezug auf die Darstellung in Fig. 8 in Folgendem.

In dem Boden des Filtergehäuses 2 ist ein Verschlusselement 40 axial fixiert drehbar dicht gelagert. Für die dichte Lagerung sorgt ein Dichtring 41. Innerhalb des Filtergehäuses ist das Verschlusselement 40 an seinem freien Ende mit einem Innengewinde 42 versehen. Dieses Innengewinde 42 greift in ein an dem freien Ende des Stabes 9 der Stabeinrichtung 1 vorgesehenen Außengewinde 43 an. Durch ein Drehen des Verschlusselementes 40, das zu diesem Zweck mit einem Innensechskant 44 versehen ist, lässt sich die Stabeinrichtung 1 über deren Stab 9 axial verschieben. Durch das Verschlusselement 40 kann somit einerseits die Stabeinrichtung 1 innerhalb des Filtergehäuses 2 für einen Filterbetrieb axial fixiert werden und andererseits für ein Lösen aus dem Filtergehäuse 2 aus diesem herausgeschoben werden. Für ein solches Herausschieben muss das Verschlusselement 40 lediglich entgegengesetzt zu der Schließdrehung gedreht werden.

Das Verschlusselement 40 ragt in den Aufnahmeraum 11 des Filtergehäuses 2, der bei einem Kraftstofffilter als Wassersammelraum dient. Eine Einrichtung zum Ablassen von Wasser aus dem Aufnahmeraum 11 kann in das Verschlusselement 40 integriert sein. Zu dem Zweck sind in dem Verschlusselement zwei Durchflussöffnungen vorgesehen, nämlich eine erste Durchflussöffnung 45 innerhalb des Aufnahmeraumes 11 sowie eine direkt an die Atmosphäre außerhalb des Filters angrenzende zweite Durchflussöffnung 46. Zwischen diesen Durchflussöffnungen 45, 46 liegt ein Ventil 47. Dieses Ventil 47 setzt sich zusammen aus einem in das Verschlusselement 40 integrierten Ventilsitzring 48 und einem von dem Stab 9 gebildeten Ventilstößel 49. Zwischen Ventilstößel 49 und Ventilsitzring 48 ist ein Ventildichtring 50 vorgesehen. Bei betriebsfähig montierter Stabeinrichtung 1 ist das Ventil 47 über den in seinem freien Endbereich als Ventilstößel 49 wirkenden Stab 9 zwangsweise verschlossen und bei aus dem Ventilgehäuse 2 gelöster Stabeinrichtung 1 wiederum zwangsweise geöffnet. Ein Wasserablass aus dem Aufnahmeraum 11 ist bei dieser Ausführung somit lediglich bei einer von dem Filtergehäuse 2 zumindest teilweise gelösten Stabeinrichtung 1 möglich.

Eine andere, besonders vorteilhafte Art einer Integration einer Wasserablasseinrichtung in das Verschlusselement 40 besteht darin, eine übliche, beispielsweise funktionell aus DE 42 39 099 C2 bekannte Wasserablassschraube in das Verschlusselement 40 einzusetzen.

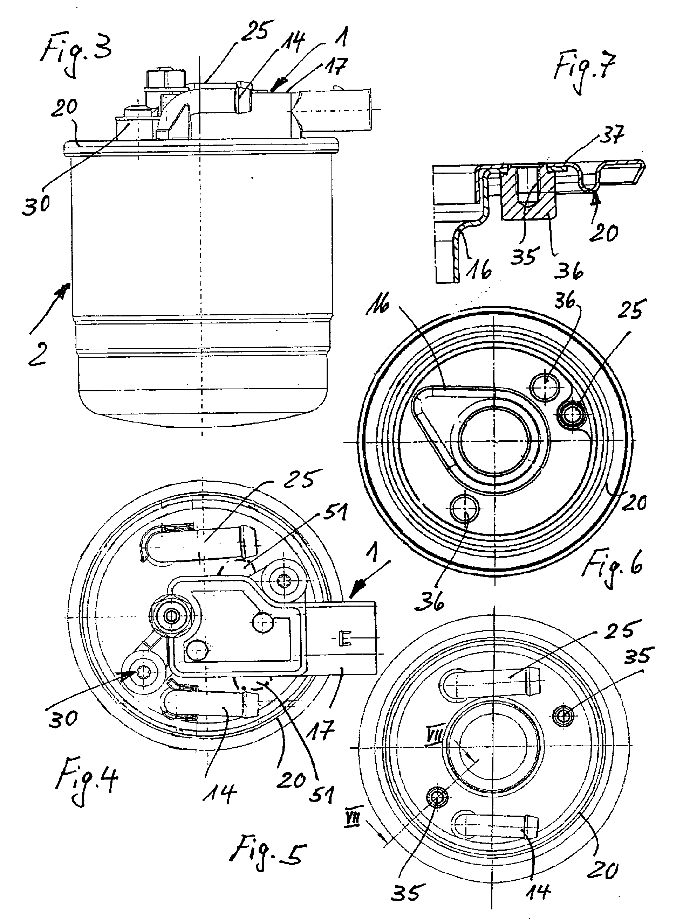

Als ein Hilfsmittel zum Lösen der Stabeinrichtung 1 von dem Filtergehäuse 2 beziehungsweise zumindest dem Filterdeckel 20 kann in dem, dem Kopfbereich 17 der Stabeinrichtung 1 an dem Filterdeckel 20 außen benachbarten Bereich mindestens eine Hebe-Rampe 51 gemäß der ausschließlich in Fig. 4 angedeuteten Darstellung vorgesehen sein. Die Neigung dieser mindestens einen Rampe 51 verläuft derart, dass die Stabeinrichtung 1 bei einem Verdrehen nach gelöster Schraubverbindung 30 auf die mindestens eine Rampe 51 auflaufen kann. Durch ein solches Auflaufen wird die Stabeinrichtung 1 zwangsläufig geringfügig aus dem Filterdeckel 20 herausgezogen. Für ein Lösen festsitzender Dichtungen der Stabeinrichtung 1 kann dies ausreichend sein.

Alle in der Beschreibung und in den nachfolgenden Ansprüchen dargestellten Merkmale können sowohl einzeln als auch in beliebiger Form miteinander kombiniert erfindungswesentlich sein.

## Patentansprüche

1. Kraftstofffilter eines Fahrzeug-Verbrennungsmotors mit
- einem Filtergehäuse (2), das ein topfförmiges Gehäuseteil und einen mit diesem dicht verbundenen Deckel (20) umfasst,
- einem innerhalb des Filtergehäuses (2) gelagerten, von radial außen nach innen durchströmten Ringfiltereinsatz (3),
- je einem, gegenüber der Mittelachse des Filtergehäuses (2) radial versetzt angeordneten Zu- und Abführstutzen (14, 25) für den das Filter durchströmenden Kraftstoff,
- einer durch ein Filtermedium (7) des Ringfiltereinsatzes (3) bewirkten Teilung des Gehäuseinneren in einen Filterroh- und -reinraum (8; 24),
- einem rein- oder rohseitig bei Einbaulage des Filters unten liegenden Aufnahmeraum (11) für aus dem Kraftstoff innerhalb des Filters abgeschiedenes Wasser,
**gekennzeichnet durch** die Merkmale,
- der Zuführstutzen (14) kommuniziert mit einem KraftstoffZuführkanal (13), der das filtermediumfreie Zentrum des Ringfiltereinsatzes (3) zumindest teilweise als Bestandteil einer, in einer zentralen Öffnung des Deckels (20) lösbar dicht gelagerten Stabeinrichtung (1) durchgreift,
- der Deckel (20) ist bereichsweise doppelwandig ausgebildet,
- die die Stabeinrichtung (1) aufnehmende Öffnung des Deckels (20) liegt innerhalb des doppelwandigen Deckelbereiches,
- der freie Innenraum des doppelwandigen Deckelbereichs bildet einen Verbindungs-Raum (15) zwischen dem Kraftstoffzuführstutzen (14) und dem Kraftstoffzuführkanal (13) innerhalb des Ringfiltereinsatzes (3).

2. Kraftstofffilter nach Anspruch 1, bei dem die Stabeinrichtung (1) über Radialdichtringe gegenüber dem Deckel (20) und einer Endscheibe (4) des Ringfiltereinsatzes (3) gedichtet ist,
**gekennzeichnet durch** die Merkmale,
- die Stabeinrichtung (1) ist über mindestens eine achsparallele, zur Filtergehäusemittelachse verlaufende Schraubverbindung (39) lösbar an dem Deckel (20) befestigt,
- die Schraubverbindung (30) setzt sich zusammen aus jeweils einem deckelseitigen Sacklochgewinde (35), einer Durchgangsbohrung (33) in einem Montagebereich der Stabeinrichtung (1) sowie einer, die wenigstens eine Durchgangsbohrung (33) durchgreifenden Kopfschraube.

3. Kraftstofffilter nach Anspruch 1 oder 2,
**dadurch gekennzeichnet,**
**dass** die wenigstens eine Durchgangsbohrung (33) innerhalb eines zugehörigen Montagebereiches der Stabeinrichtung (1) mit einem, die Schraubverbindung nicht beeinträchtigenden Innengewinde (38) für einen Ansatz einer Aushebeschraube zum Lösen der Stabeinrichtung (1) aus deren Dichtsitzen versehen ist.

4. Kraftstofffilter nach einem der vorhergehenden Ansprüche, bei der zumindest der Montagebereich der Stabeinrichtung (1) aus Kunststoff besteht,
**gekennzeichnet durch** die Merkmale
- die wenigstens eine, mit einem Aushebegewinde versehene Durchgangsbohrung (33) ist radial innen mit einer Metallhülse (39) zur Aufnahme der axialen Schraubverbindungskräfte einerseits und der Aushebekräfte andererseits ausgekleidet,
- die betreffende Metallhülse (39) ist innerhalb des Kunststoffmaterials verdreh- und axial verschiebegesichert gelagert.

5. Kraftstofffilter nach einem der vorhergehenden Ansprüche,
**dadurch gekennzeichnet,**
**dass** das Sacklochgewinde (35) innerhalb eines fest und dicht an den Deckel (20) von dessen Innenseite aus angesetzten Bauteiles (36) liegt.

6. Kraftstofffilter nach Anspruch 5,
**gekennzeichnet durch** die Merkmale,
- der Deckel (20) besteht insgesamt aus Metall,
- der Doppelwandbereich des Deckels (20) besteht aus zwei miteinander verbundenen Blechen.

7. Kraftstofffilter nach Anspruch 6,
**dadurch gekennzeichnet,**
**dass** die den Doppelwandbereich des Deckels (20) bildenden zwei Bleche untereinander und das wenigstens eine, das Sacklochgewinde (35) aufweisende Bauteil (36) mit dem zugehörigen Deckelbereich jeweils verlötet oder verschweißt sind.

8. Filtergehäuse mit den Merkmalen nach einem der vorhergehenden Ansprüchen für ein Kraftstofffilter nach einem der vorhergehenden Ansprüche.

9. Filtergehäuse nach Anspruch 8, soweit auf Anspruch 1 rückbezogen,
**gekennzeichnet durch** die Merkmale,
- die Stabeinrichtung (1) durchragt den Ringfiltereinsatz (3),
- das dem Boden des Filtergehäuse zugewandte Ende der Stabeinrichtung (1) ist mit einem, in dem Boden gedichtet drehbar gelagerten, von außen betätigbaren Verschlusselement (40) verschraubt,
- der Grad der Verschraubung bestimmt die Lage der Stabeinrichtung (1) innerhalb des Filtergehäuses (2).

10. Filtergehäuse nach Anspruch 9,
**dadurch gekennzeichnet,**
**dass** für einen Ablass von, in dem Aufnahmeraum (11) gesammeltem Wasser eine Wasserablasseinrichtung in das Verschlusselement integriert ist.

11. Filtergehäuse nach Anspruch 10,
**gekennzeichnet durch** die Merkmale,
- das Verschlusselement (40) und das freie Ende des Stabes (9) der Stabeinrichtung (1) bilden ein Wasserablass-Ventil (47), wobei eines dieser Teile (40, 9) als Ventilstößel (49) und das andere als Ventilsitzring (48) dienen,
- das Ventil (47) ist bei betriebsfähig in dem Filtergehäuse (2) montiertem Zustand der Stabeinrichtung (1) geschlossen und bei zumindest teilweise aus dem Filtergehäuse (2) gelöster Stabeinrichtung (1) geöffnet für einen Wasserabfluss nach außen.

12. Filtergehäuse nach Anspruch 10,
**dadurch gekennzeichnet,**
**dass** die Wasserablasseinrichtung eine an sich zu diesem Zweck bekannte Wasserablassschraube umfasst.

13. Filtergehäuse nach einem der Ansprüche 8 bis 12,
**dadurch gekennzeichnet,**
**dass** der Deckel (20) mit einer geneigten Aushebe-Rampe (51) für die Stabeinrichtung (1) versehen ist, wobei dieser Aushebe-Rampe (51) an einem aus dem Deckel (20) ragenden Kopfbereich (17) der Stabeinrichtung (1) ein durch Drehen der Stabeinrichtung (1) auf die Rampe (51) auflaufbarer Kopfabschnitt (32) zugeordnet ist.

## Claims

1. A fuel filter of a vehicle internal combustion engine, comprising
- a filter housing (2) which comprises a pot-shaped housing part and a cover (20) connected thereto in a sealing manner,
- an annular filter insert (3) which is supported within the filter housing (2) and which experiences flow radially from the outside to the inside,
- one inlet and one outlet port each (14, 25), which are radially offset in relation to the center axis of the filter housing (2), for the fuel flowing through the filter,
- a partition of the housing interior into an uncleaned filter chamber and a clean filter chamber (8; 24) effected by a filter medium (7) of the annular filter insert (3),
- a receiving chamber (11) disposed on the bottom on the clean chamber or unclean chamber side in the installation position of the filter for water that is separated from the fuel within the filter, **characterized by** the features,
- the inlet port (14) communicates with the fuel supply duct (13) which extends at least partially through the center of the annular filter insert (3) that is free of filter medium as part of a rod device (1) detachably mounted in a sealing manner in a central opening of the cover (20),
- the cover (20) is configured to have double walls in some regions,
- the opening of the cover (20) receiving the rod device (1) is disposed inside the double-walled cover region,
- the free interior of the double-walled cover region forms a connecting space (15) between the fuel inlet port (14) and the fuel supply duct (13) inside the annular filter insert (3).

2. The fuel filter according to claim 1, in which the rod device (1) is sealed via radial sealing rings with respect to the cover (20) and an end disk (4) of the annular filter insert (3),
**characterized by** the features
- the rod device (1) is detachably fastened to the cover (20) via at least one screw connection (39) extending axially parallel to the center axis of the filter housing,
- the screw connection (30) is composed in each case of a blind hole thread (35) on the cover side, a through-hole (33) in a mounting region of the rod device (1), and a head screw extending through the at least one through-hole (33).

3. The fuel filter according to claim 1 or claim 2,
**characterized in**
**that** the at least one through-hole (33) is provided within the associated mounting region of the rod device (1) with an internal thread (38), which does
not affect the screw connection, for applying a withdrawal screw for detaching the rod device (1) from its sealing seats.

4. The fuel filter according to any one of the preceding claims, in which at least the mounting region of the rod device (1) consists of plastic,
**characterized by** the features
- the at least one through-hole (33) provided with a withdrawal thread is lined radially on the inside with a metal sleeve (39) for absorbing the screw connection forces on the one hand and the withdrawal forces on the other,
- the relevant metal sleeve (39) is supported within the plastic material and secured against rotation and axial displacement.

5. The fuel filter according to any one of the preceding claims,
**characterized in**
**that** the blind hole thread (35) lies within a component (36) which is attached to the cover (20) from the inside of the same in a firm and sealing manner.

6. The fuel filter according to claim 5,
**characterized by** the features,
- the cover (20) as a whole is made of metal,
- the double-walled region of the cover (20) consists of two metal sheets which are connected to one another.

7. The fuel filter according to claim 6,
**characterized in**
**that** two metal sheets forming the double-walled region of the cover (20) are in each case soldered or welded to one another, and the at least one component (36) having the blind hole thread (35) is in each case soldered or welded to the associated cover region.

8. A filter housing with the features according to any one of the preceding claims for a fuel filter according to any one of the preceding claims.

9. The filter housing according to claim 8 insofar as related to claim 1,
**characterized by** the features,
- the rod device (1) extends through the annular filter insert (3),
- the rod device's (1) end facing the bottom of the filter housing is screwed to a closure element (40) which can be actuated from outside and which is mounted in the bottom in a sealed and rotatable manner,
- the screwing extent determines the position of the rod device (1) within the filter housing (2).

10. The filter housing according to claim 9,
**characterized in**
**that** for draining the water accumulated in the receiving chamber (11), a water drain device is integrated in the closure element.

11. The filter housing according to claim 10,
**characterized by** the features,
- the closure element (40) and the free end of the rod (9) of the rod device (1) form a water drain valve (47), wherein one of these parts (40, 9) serves as valve tappet (49) and the other one as valve seat ring (48),
- with the rod device (1) mounted in an operational state in the filter housing (2), the valve (47) is closed, and with the rod device (1) at least partially detached from the filter housing (2) it is open for water drainage to the outside.

12. The filter housing according to claim 10,
**characterized in**
**that** the water drain device comprises a water drain screw which is known per se for this purpose.

13. The filter housing according to any one of the claims 8 to 12,
**characterized in**
**that** the cover (20) is provided with an inclined withdrawal ramp (51) for the rod device (1), wherein at a head region (17) projecting out of the cover (20),
a head section (32) is assigned to said withdrawal ramp (51), which head section, by rotating the rod device (1), can run against the ramp (51).

## Revendications

1. Filtre de carburant d'un moteur à combustion interne de véhicule automobile comportant
- un logement de filtre (2), qui comprend une partie de logement en forme de pot et un couvercle (20) relié de manière étanche à celle-ci,
- un insert de filtre annulaire (3) positionné à l'intérieur du logement de filtre (2), traversé radialement de l'extérieur vers l'intérieur,
- respectivement une tubulure d'amenée et une tubulure d'évacuation (14, 25) du carburant s'écoulant à travers le filtre, disposées de manière décalée radialement par rapport à l'axe médian du logement de filtre (2),
- une division de l'intérieur du logement en une chambre de filtre brute et une chambre de filtre purifiée (8 ; 24) provoquée par un milieu de filtrage (7) de l'insert de filtre annulaire (3),
- une chambre de réception (11) de l'eau séparée du carburant à l'intérieur du filtre, située en dessous en la position de montage du filtre du côté brut ou du côté purifié,
**caractérisé par** les caractéristiques,
- la tubulure d'amenée (14) communique avec un canal d'amenée de carburant (13), qui traverse le centre exempt de milieu de filtrage de l'insert de filtre annulaire (3) au moins partiellement en tant que partie intégrante d'un élément formant tige (1) positionné de manière étanche amovible dans une ouverture centrale du couvercle (20),
- le couvercle (20) est réalisé sur des portions avec une double paroi,
- l'ouverture du couvercle renfermant l'élément formant tige (1) est située à l'intérieur de la région du couvercle (20) à double paroi,
- l'espace intérieur libre de la zone de couvercle à double paroi forme une chambre de liaison (15) entre la tubulure d'amenée de carburant (14) et le canal d'amenée de carburant (13) à l'intérieur de l'insert de filtre annulaire (3).

2. Filtre de carburant selon la revendication 1, dans lequel l'élément formant tige est rendu étanche par rapport au couvercle (20) et à un disque d'extrémité (4) de l'insert de filtre annulaire (3) par des bagues d'étanchéité radiale,
**caractérisé par** les caractéristiques
- l'élément formant tige (1) est fixé de manière amovible au couvercle (20) par au moins une liaison par vissage (39) s'étendant sur un axe parallèle à l'axe médian du logement de filtre,
- la liaison par vissage (30) se compose de respectivement un orifice borgne (35) du côté du couvercle, un alésage traversant (33) dans une zone de montage de l'élément formant tige (1) ainsi qu'une tête de vis traversant le au moins un alésage traversant (33).

3. Filtre de carburant selon la revendication 1 ou 2,
**caractérisé en ce que**
au moins un alésage traversant (33) est pourvu à l'intérieur d'une zone de montage afférente de l'élément formant tige (1) d'un filetage intérieur ne détériorant pas la liaison par vissage d'un prolongement d'un tire-fond afin de desserrer la liaison par vissage (38) hors des sièges d'étanchéité de celle-ci.

4. Filtre de carburant selon une des revendications précédentes, dans lequel au moins la zone de montage de l'élément formant tige (1) est constituée de plastique,
**caractérisé par** les caractéristiques
- au moins un alésage traversant (33) pourvu d'un tire-fond est revêtu radialement à l'intérieur d'une gaine métallique (39) pour absorber les forces de liaison par vissage axiales d'une part et les forces de tire-fond d'autre part,
- la gaine métallique (39) concernée est positionnée à l'intérieur du matériau plastique de manière sécurisée contre une torsion et un coulissement axial.

5. Filtre de carburant selon une des revendications précédentes,
**caractérisé en ce que**
l'orifice borgne (35) est situé à l'intérieur d'un composant (36) posé de manière solide et étanche sur le couvercle (20) de la face intérieure de ce dernier vers l'extérieur.

6. Filtre de carburant selon la revendication 5, **caractérisé par** les caractéristiques
- le couvercle (20) est constitué en totalité de métal,
- la région à double paroi du couvercle (20) est constituée de deux tôles reliées l'un à l'autre.

7. Filtre de carburant selon la revendication 6,
**caractérisé en ce que**
les deux tôles formant la région à double paroi du couvercle (20) sont brasées ou soudées l'une sous l'autre et le au moins un composant (36) présentant l'orifice borgne (35) est brasé ou soudé à la zone de couvercle correspondante.

8. Logement de filtre présentant les caractéristiques selon une des revendications précédentes pour filtre de carburant selon une des revendications précédentes.

9. Filtre de logement selon la revendication 8, prise en dépendance de la revendication 1,
**caractérisé par** les caractéristiques
- l'élément formant tige (1) saille à travers l'insert de filtre annulaire (3),
- l'extrémité de l'élément formant tige (1) tournée vers le fond du logement de filtre est vissée à un élément d'obturation (40) positionné rotativement de manière étanche dans le fond, actionnable de l'extérieur,
- le degré de vissage détermine la position de l'élément formant tige (1) à l'intérieur du logement de filtre (2).

10. Logement de filtre selon la revendication 9,
**caractérisé en ce que**
en vue d'une purge de l'eau accumulée dans la chambre de réceptacle (11), un dispositif de purge d'eau est intégré à l'élément d'obturation.

11. Logement de filtre selon la revendication 10,
**caractérisé par** les caractéristiques
- l'élément d'obturation (40) et l'extrémité libre de la tige (9) de l'élément formant tige (1) forment une soupape de purge d'eau (47), dans lequel une de ces parties (40, 9) sert de poussoir de soupape (49) et l'autre d'assise annulaire de soupape (48),
- la soupape (47) est en mode de fonctionnement fermée en l'état monté dans le logement de filtre (2) de l'élément formant tige (1) et ouverte en vue d'une purge d'eau vers l'extérieur quand l'élément formant tige (1) est relâché au moins partiellement hors du logement de filtre (2).

12. Logement de filtre selon la revendication 10,
**caractérisé en ce que**
le dispositif de purge d'eau comprend une vis de purge d'eau connue en soi à cette fin.

13. Logement de filtre selon une des revendications 8 à 12,
**caractérisé en ce que**
le couvercle (20) est pourvu d'une rampe de tirage (51) inclinée destinée à l'élément formant tige, dans lequel cette rampe de tirage (1) est coordonnée sur une zone de tête (17) de l'élément formant tige (1) dépassant hors du couvercle (20) à une portion de tête (32) se déplaçant sur la rampe (51) en raison d'une rotation de l'élément formant tige (1).
